# EUROPEAN PATENT APPLICATION

(11) **EP 3 839 393 A1**
(43) Date of publication of application: **23.06.2021**
(21) Application number: 20213212.2
(22) Date of filing: 10.12.2020
(51) Int. Cl.: F25J 3/04, F17C 9/02

(54) **A METHOD AND APPARATUS FOR SUPPLYING A CRYOGENIC STREAM WITH A CONTROLLED TEMPERATURE FROM A BACK-UP SYSTEM**

(30) Priority: 21.12.2019 US 201916724191
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: LE BOT, Patrick, 78350 Les Loges-En-Josas (FR); GUERIF, Pierre-Philippe, Houston, Texas 77024 (US); FOLLACA, Vincent, Houston, Texas 77024 (US)
(74) Representative: Air Liquide

(57) **Abstract**

In a method for temperature-controlled delivery of the gaseous product at temperatures at or below ambient in the event of an air separation unit failure, a first portion of a stored cryogenic liquid product is sent to the back-up vaporizer and heated to ambient conditions, and a second portion (24) of stored cryogenic liquid product, which is at the cryogenic storage temperature, bypasses the back-up vaporizer using a bypass line controlled by a bypass valve (30) and is mixed with the vaporized gas. This mixed stream will then preferably go through a static mixer (40) in order to get to a homogenous temperature that is below the ambient temperature.

## Description

The present invention generally relates to a method for producing a gaseous product from a cryogenic liquid storage device. The method and apparatus are particularly useful for producing gaseous oxygen and/or nitrogen in the event of an air separation unit (ASU) failure.

Oxygen and nitrogen products are typically supplied by an ASU. In order to increase the reliability of an ASU, a back-up system, which is typically located nearby the ASU, can include one or several liquid storages, one or several vaporizers and sometimes one or several pumps. In the event of the ASU going down, the back-up vaporizer kicks in to supply oxygen or nitrogen, typically at ambient temperature, by vaporizing the cryogenic liquid.

For some particular applications, gases such as oxygen and/or nitrogen are needed at temperatures colder than ambient, for example, at 0°C, or even less such as -20°C to -50°C. As such, there is a need to supply gaseous products at temperatures below ambient from the same back-up vaporization system.

### BRIEF SUMMARY OF THE INVENTION

The present invention is directed to a device and a method that satisfies at least one of these needs. Certain embodiments of the current invention allow for temperature-controlled delivery of the gaseous product at temperatures at or below ambient temperatures.

In one embodiment, a first portion of the liquid product is sent to the back-up vaporizer and heated to ambient conditions, and a second portion of the liquid product, which is at the storage temperature, bypasses the back-up vaporizer using a bypass line controlled by a bypass valve and is mixed with the product gas. This mixed stream will then preferably go through a static mixer in order to get to a homogenous temperature. In a preferred embodiment, a temperature control loop can be used to adjust the opening of the by-pass valve (in order to control the mass flow rate of the liquid cryogen) in order to reach the desired product temperature.

In a preferred embodiment, the temperature indicator is proximal the end gas user, such that any temperature losses between the static mixer and the end user are taken into account. In another embodiment, the mixture can be vented until the temperature of the mixture is within the desired temperature range. Other typical control processes known to those skilled in the art can also be used (e.g., feed forward, delay during start-up sequencing).

In one embodiment, a method for controlling the temperature of a vaporized fluid coming from a back-up vaporization system after detection of a disturbance in production of an air separation unit (ASU) is provided. In one embodiment, the method comprises: providing a cryogenic fluid from a liquid storage tank; splitting the cryogenic fluid into a first stream and a second stream; vaporizing the first stream in a vaporizer to produce a first gaseous stream at a first temperature that is about ambient temperature; and mixing the first gaseous stream with the second stream, which is at a second temperature that is lower than the first temperature, to create a mixed stream that is at a mixed temperature which is greater than the second temperature and lower than the first temperature, wherein the second stream bypasses the vaporizer before mixing with the first gaseous stream. In a preferred embodiment, the flow rate of the second stream is controlled to bring the mixed temperature within a desired product temperature range. Additionally, the cryogenic fluid can be selected from the group consisting of oxygen, nitrogen, argon, xenon, and krypton.

According to one object of the invention, there is provided a method for controlling the temperature of a vaporized fluid coming from a back-up vaporization system after detection of a disturbance in production of an air separation unit (ASU), the method comprising the steps of:
- providing a cryogenic fluid from a liquid storage tank ;
- splitting the cryogenic fluid into a first stream and a second stream;
- vaporizing the first stream in a vaporizer to produce a first gaseous stream at a first temperature that is about ambient temperature; and
- mixing the first gaseous stream with the second stream, which is at a second temperature lower than the first temperature, to create a mixed stream that is at a temperature which is greater than the second temperature and lower than the first temperature, wherein the second stream bypasses the vaporizer before mixing with the first gaseous stream,
wherein the flow rate of the second stream is controlled to bring the mixed temperature within a desired product temperature range,
wherein the cryogenic fluid is selected from the group consisting of oxygen, nitrogen, argon, xenon, and krypton.

In optional embodiments of the method for controlling the temperature of the vaporized fluid:
- the first temperature and the second temperature differ by at least 100°C;
- the flow rate of the second stream can be controlled by a by-pass control valve that is in communication with a temperature controller that is configured to determine the mixed temperature; and/or
- the method can further include the step of venting the mixed stream if the mixed temperature is outside of the desired product temperature range.
- the second stream is not vaporized before being mixed with the first stream.
- the second stream is vaporised after being mixed with the first stream.

In another embodiment, an apparatus for controlling the temperature of a vaporized fluid coming from a back-up vaporization system after detection of a disturbance in production of an air separation unit (ASU) is provided. In this embodiment, the apparatus can include: a cryogenic liquid storage tank configured to store a cryogenic liquid at a temperature below -50°C; means for splitting the cryogenic fluid into a first stream and a second stream; a vaporizer in fluid communication with the cryogenic liquid storage tank, wherein the vaporizer is configured to vaporize cryogenic liquid received from the cryogenic liquid storage tank to produce a gaseous fluid at an ambient temperature; a bypass line having a bypass valve, wherein the bypass line is configured to receive a portion of the cryogenic liquid upstream of the vaporizer and then introduce the portion of the cryogenic liquid to a mixer thereby producing a mixed stream at a mixed temperature, wherein the mixer is configured to mix the portion of the cryogenic liquid and the gaseous fluid at a location downstream the vaporizer; and a controller configured to adjust the mixed temperature to be within a desired product temperature range.

According to another object of the invention, there is provided an apparatus for controlling the temperature of a vaporized fluid coming from a back-up vaporization system after detection of a disturbance in production of an air separation unit (ASU), the apparatus comprising:
- a cryogenic liquid storage tank configured to store a cryogenic liquid at a temperature below -50°C;
- splitting the cryogenic fluid into a first stream and a second stream;
- a vaporizer in fluid communication with the cryogenic liquid storage tank, wherein the vaporizer is configured to vaporize cryogenic liquid received from the cryogenic liquid storage tank to produce a gaseous fluid at an ambient temperature;

- a bypass line having a bypass valve, wherein the bypass line is configured to receive a portion of the cryogenic liquid upstream of the vaporizer and then introduce the portion of the cryogenic liquid to a mixer thereby producing a mixed stream at a temperature, wherein the mixer is configured to mix the portion of the cryogenic liquid and the gaseous fluid at a location downstream the vaporizer; and
- a controller configured to adjust the temperature of the mixed stream to be within a desired product temperature range.

In optional embodiments of the apparatus for controlling the temperature of the vaporized fluid:
- the controller is capable of adjusting the temperature of the mixed stream by adjusting the flow rate of the portion of the cryogenic liquid through the bypass valve;
- the apparatus can also include a vent valve disposed downstream the mixer; and/or
- the vent valve is configured to open if the temperature of the mixed stream is outside of the desired product temperature range and close once the temperature of the mixed stream is within the desired product temperature range.
- the controller is downstream of the mixer.
- the controller is downstream of the inlet to the vent valve.
- the controller is capable of opening and closing the vent valve

The foregoing has outlined rather broadly the features and technical advantages of the present invention in order that the detailed description of the invention that follows may be better understood. Additional features and advantages of the invention will be described hereinafter which form the subject of the claims of the invention.

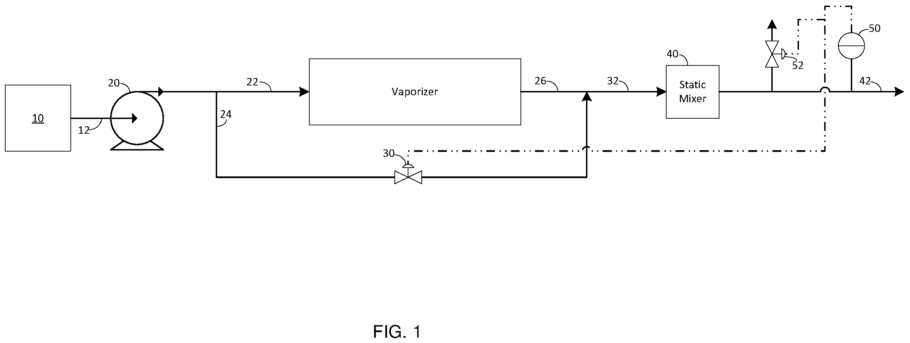

For a more complete understanding of the present invention, reference is now made to the following descriptions taken in conjunction with the accompanying drawings, in which:
The Figure is a process flow diagram of an embodiment of the present invention.

Referring to the Figure, cryogenic fluid 12 is withdrawn from cryogenic storage 10 using pump 20. Preferable cryogenic fluids include air gases that can be sourced from an ASU, such as nitrogen, oxygen, argon, krypton, and xenon but also include other gases such as hydrogen, methane, carbon dioxide or carbon monoxide.

Cryogenic fluid 12 is then split into first stream 22 and second stream 24, wherein first stream 22 is sent to the vaporizer, thereby producing vaporized fluid 26, which is preferably at ambient temperature. Vaporizer can be any type of fluid vaporizer known in the art, such as atmospheric or water-bath type vaporizers.

Bypass valve 30 is open to an appropriate amount, thereby inducing a flow of second stream 24 to bypass the vaporizer, wherein the second stream 24 is mixed in liquid form with vaporized fluid 26 to produce mixed fluid 32 having a temperature. In the embodiment shown, two phase mixed fluid 32 is preferably sent to static mixer 40 to ensure a more homogenous stream and to vaporise the liquid part coming from fluid 24. Product gaseous stream 42 is withdrawn from static mixer 40 and sent to downstream customer (not shown).

As part of the control process, temperature indicator 50 is used to measure the temperature of the stream coming from the static mixer 40 and based on the measured temperature; the flow rate of stream 24 is adjusted in order to be in the desired temperature range by adjusting the openness of bypass valve 30. In one embodiment, vent valve 52 can be used to vent the mixed fluid 42 in the event the mixed temperature is too far away from the desired temperature range. In a preferred embodiment, temperature indicator 50 is located as close as practicable to the end user, such that the end user receives the product gaseous stream 42 at the appropriate temperature.

In this way it is possible to produce a stream 42 having a temperature lower than the ambient temperature, for example at 0°C, or even less such as -20°C to -50°C
In one embodiment, as close as practicable is meant to encompass a distance wherein the heat losses for the product gaseous stream 42 are minimal such that the temperature of the product gaseous stream 42 stays within the desired temperature range after the temperature indicator 50. In another embodiment, as close as practicable is meant to encompass a distance where the temperature losses after the temperature indicator 50 are determinable with reasonable certainty.

While the embodiments described with reference to the figure specifically disclose oxygen and nitrogen as being the cryogenic fluid, those of ordinary skill in the art will recognize that other cryogenic fluids can also be included.

As used herein - cryogenic fluid is meant to encompass any fluid that is at a temperature of less than -50°C. As used herein - a temperature that is "close to" or "about" is the same as or within 5°C of the referenced temperature.

## Claims

1. A method for controlling the temperature of a vaporized fluid coming from a back-up vaporization system after detection of a disturbance in production of an air separation unit (ASU), the method comprising the steps of:
• providing a cryogenic fluid from a liquid storage tank (10);
• splitting the cryogenic fluid into a first stream (22) and a second stream (24);
• vaporizing the first stream in a vaporizer to produce a first gaseous stream (26) at a first temperature that is about ambient temperature; and
• mixing the first gaseous stream with the second stream, which is at a second temperature lower than the first temperature, to create a mixed stream that is at a temperature which is greater than the second temperature and lower than the first temperature, wherein the second stream bypasses the vaporizer before mixing with the first gaseous stream,
wherein the flow rate of the second stream is controlled to bring the mixed temperature within a desired product temperature range,
wherein the cryogenic fluid is selected from the group consisting of oxygen, nitrogen, argon, xenon, and krypton.

2. The method of claim 1, wherein the first temperature and the second temperature differ by at least 100°C.

3. The method of claim 1 or 2, wherein the flow rate of the second stream is controlled by a by-pass control valve (30) that is in communication with a temperature controller (50) that is configured to determine the mixed temperature.

4. The method of any preceding claim, further comprising the step of venting the mixed stream if the mixed temperature is outside of the desired product temperature range.

5. The method of any preceding claim wherein the second stream (24) is not vaporized before being mixed with the first stream.

6. The method of Claim 5 wherein the second stream is vaporised after being mixed with the first stream.

7. An apparatus for controlling the temperature of a vaporized fluid coming from a back-up vaporization system after detection of a disturbance in production of an air separation unit (ASU), the apparatus comprising:
a cryogenic liquid storage tank (10) configured to store a cryogenic liquid at a temperature below -50°C;
splitting the cryogenic fluid into a first stream (22) and a second stream (24);
a vaporizer in fluid communication with the cryogenic liquid storage tank, wherein the vaporizer is configured to vaporize cryogenic liquid received from the cryogenic liquid storage tank to produce a gaseous fluid (26) at an ambient temperature;
a bypass line (24) having a bypass valve (30), wherein the bypass line is configured to receive a portion of the cryogenic liquid upstream of the vaporizer and then introduce the portion of the cryogenic liquid to a mixer (40) thereby producing a mixed stream at a temperature, wherein the mixer is configured to mix the portion of the cryogenic liquid and the gaseous fluid at a location downstream the vaporizer; and
a controller (50) configured to adjust the temperature of the mixed stream to be within a desired product temperature range.

8. The apparatus of claim 7, wherein the controller (50) is capable of adjusting the temperature of the mixed stream by adjusting the flow rate of the portion of the cryogenic liquid through the bypass valve (30).

9. The apparatus of claim 7 or 8, further comprising a vent valve (52) disposed downstream the mixer.

10. The apparatus of claim 9, wherein the vent valve (52) is configured to open if the temperature of the mixed stream is outside of the desired product temperature range and close once the temperature of the mixed stream is within the desired product temperature range.

11. The apparatus of claims 7 to 10 wherein the mixer is a static mixer (40).

12. The apparatus of claims 7 to 11 wherein the controller (50) is downstream of the mixer (40).

13. The apparatus of claims 9 and 10 wherein the controller (50) is downstream of the inlet to the vent valve (52).

14. The apparatus of claims 9, 10 or 13 wherein the controller (50) is capable of opening and closing the vent valve (52).
